# EUROPÄISCHE PATENTSCHRIFT

(11) **EP 2 714 496 B1**
(45) Veröffentlichungstag und Bekanntmachung des Hinweises auf die Patenterteilung: **07.10.2015**
(21) Anmeldenummer: 12719279.7
(22) Anmeldetag: 04.05.2012
(51) Int. Cl.: B62D 65/18

(54) **VORRICHTUNG ZUM FÖRDERN UND ANLAGE ZUR OBERFLÄCHENBEHANDLUNG VON GEGENSTÄNDEN**
APPARATUS FOR CONVEYING AND PLANT FOR SURFACE-TREATING ARTICLES
DISPOSITIF DE TRANSPORT D'OBJETS ET INSTALLATION DE TRAITEMENT DE SURFACE D'OBJETS

(30) Priorität: 31.05.2011 DE 102011103729
(43) Veröffentlichungstag der Anmeldung: 09.04.2014
(73) Patentinhaber: Eisenmann AG, 71032 Böblingen (DE)
(72) Erfinder: ROBBIN, Jörg, 72119 Ammerbuch-Pfäffingen (DE)
(74) Vertreter: Heinrich, Hanjo
(86) Internationale Anmeldenummer: PCT/EP2012/001907
(87) Internationale Veröffentlichungsnummer: WO 2012/163458

(56) Entgegenhaltungen:
- US-A- 5 577 593
- US-A- 5 839 567
- US-A1- 2008 251 354

## Beschreibung

Die Erfindung betrifft eine Vorrichtung zum Fördern von Gegenständen mit
a) wenigstens einem Endlos-Antriebsstrang, der ein Lasttrum und ein Leertrum ausbildet und eine Förderrichtung vorgibt;
b) einer Führungseinrichtung für den wenigstens einen Endlos-Antriebsstrang, die ein erstes Umlenkelement und wenigstens ein zweites Umlenkelement umfasst, über welche der wenigstens eine Endlos-Antriebsstrang umläuft,
   wobei
c) der wenigstens eine Endlos-Antriebsstrang eine Mehrzahl von Traggliedern mit sich führt, die derart angeordnet und eingerichtet sind, dass sie mit Tragstrukturen zusammenarbeiten können, an welchen wenigstens ein Gegenstand befestigbar ist.

Eine solche Vorrichtung ist aus der US 5 577 593 bekannt.

Derartige Fördervorrichtungen dienen in der Automobilindustrie dazu, Fahrzeugkarosserien, aber auch andere Gegenstände wie Karosserieteile oder dergleichen, zwischen und insbesondere auch in einzelnen Bearbeitungs- oder Behandlungsstationen zu fördern.

Außerdem betrifft die Erfindung eine Anlage zur Oberflächenbehandlung von Gegenständen mit wenigstens einer Behandlungszone, welche ein Fördersystem umfasst, mittels welchem ein Gegenstand durch die wenigstens eine Behandlungszone förderbar ist.

Üblicherweise sind Fahrzeugkarosserien dabei auf jeweils einem so genannten Skid befestigt, welcher in der Regel zwei Auflagekufen umfasst. Heutige Fahrzeugkarosserien werden bereits mit Haltebauteilen hergestellt, die standardisiert und auf die Skidtechnik abgestimmt sind. Diese Haltebauteile der Fahrzeugkarosserien sind meist Haltebleche an deren Boden. Diese Haltebleche arbeiten mit entsprechend angepassten Auflage- oder Verriegelungselementen an den Skids zusammen, die beispielsweise in Form von Auflagebolzen ebenfalls an und für sich bekannt sind und über welche eine Fahrzeugkarosserie an einem Skid befestigt wird. Für andere Gegenstände führt ein Skid z.B. einen oder mehrere Werkstückträger mit sich, welche die Gegenstände aufnehmen.

Um den Skid anzutreiben, liegt dieser bei bekannten Förderern der eingangs genannten Art z.B. mit seinen Auflagekufen auf den Traggliedern des Endlos-Antriebsstranges auf.

Im Falle von Fahrzeugkarosserien erfährt ein solcher Skid in den einzelnen Behandlungsstationen die gleiche Behandlung, wie die auf ihm befestigte Fahrzeugkarosserie. Wenn eine Fahrzeugkarosserie auf einem Skid beispielsweise durch einen Trockner geführt wird, wird jedes Mal auch der zugehörige Skid aufgeheizt, um ihn danach wieder mit der Fahrzeugkarosserie abzukühlen. Hierdurch wird bei jedem Trockenvorgang ein beträchtlicher Energieanteil zum Aufheizen und Abkühlen des jeweiligen Skids verbraucht.

In Behandlungszonen, in denen der Skid keine unmittelbare Behandlung erfährt, muss dieser dennoch mit der Fahrzeugkarosserie mitgeführt werden. Die zu fördernde Gesamtmasse von Fahrzeugkarosserie und Skid ist damit beträchtlich höher als die Masse einer Fahrzeugkarosserie allein. Beispielsweise wird eine Fahrzeugkarosserie mit einem Gewicht von etwa 400 kg auf einem Skid gefördert, der etwa 150 kg wiegt. Da größere Massen bewegt werden müssen, muss für den Transport von Fahrzeugkarosserie und Skid auch mehr Energie aufgewendet werden als für eine Fahrzeugkarosserie alleine.

Insgesamt ist bei vom Markt her bekannten Fördervorrichtungen der eingangs genannten Art, die mit Skids zusammenarbeiten, die Gesamtenergiebilanz im Hinblick auf die zu behandelnden Fahrzeugkarosserien verschlechtert und die Gesamtbetriebskosten der Anlage somit erhöht.

Es ist daher Aufgabe der Erfindung, eine Vorrichtung der eingangs genannten Art zu schaffen, die diesen Gedanken Rechnung trägt. Dabei soll es jedoch stets möglich sein, auch andere Gegenstände als Fahrzeugkarosserien zu fördern.

Diese Aufgabe wird bei einer Vorrichtung der eingangs genannten Art dadurch gelöst, dass
d) der wenigstens eine Endlos-Antriebsstrang außerdem eine Mehrzahl von Koppelgliedern mit sich führt, die derart angeordnet und eingerichtet sind, dass sie mit standardisierten Haltebauteilen.von Fahrzeugkarosserien zusammenarbeiten können.

Somit kann der Endlos-Antriebsstrang erfindungsgemäß wahlweise Tragstrukturen, z.B. Skids, die mit anderen Gegenständen als Fahrzeugkarosserien beladen sind, oder Fahrzeugkarosserien ohne Skids fördern. Darüber hinaus können auch Fahrzeugkarosserien auf Skids gefördert werden, wenn dies erforderlich sein sollte.

Es ist insbesondere wünschenswert, wenn die Bauhöhe der Fördervorrichtung möglichst gering ausfällt. Daher sind vorzugsweise
a) die Koppelglieder um eine Schwenkachse verschwenkbar mit dem Endlos-Antriebsstrang verbunden;
b) die Koppelglieder von dem Lasttrum in einer Arbeitsstellung und von dem Leertrum in einer gegenüber der Arbeitstellung verschwenkten Rücklaufstellung mitführbar;
c) an einem ersten Ende des Endlos-Antriebsstranges eine Einschwenkeinrichtung vorhanden, mittels welcher Koppelglieder aus der Rücklaufstellung in die Arbeitsstellung überführbar sind;
d) an einem zweiten Ende des Endlos-Antriebsstrangs eine Ausschwenkeinrichtung vorhanden, mittels welcher Koppelglieder aus der Arbeitsstellung in die Rücklaufstellung überführbar sind.

Wenn die Koppelglieder z.B. als beim Lasttrum nach oben ragende Elemente, beispielsweise als Auflagebolzen, ausgebildet sind, können diese an den Umlenkenden des Endlos-Antriebsstranges verschwenkt und von dem Leertrum in einer Rücklaufstellung mitgeführt werden, die weniger Bauhöhe erfordert. Dies ist vor allem wünschenswert, wenn das Lasttrum und das Leertrum des Endlos-Antriebsstrangs übereinander verlaufen.

Dabei ist es insbesondere günstig, wenn die Schwenkachse parallel zu der Förderrichtung verläuft. In diesem Fall können die Koppelglieder zur Seite aus dem Bereich, in dem der Endlos-Antriebsstrang läuft, heraus geschwenkt werden.

Vorteilhaft ist jedes Koppelglied von einem Schwenkelement getragen, das an einem Ende über ein Schwenkgelenk mit dem Endlos-Antriebsstrang verbunden ist.

Wenn die Schwenkachse in einem Bereich neben dem Endlos-Antriebsstrang angeordnet ist, können die Koppelglieder vollständig seitlich neben den Endlos-Antriebsstrang gebracht werden.

Um im Lasttrum den Bereich über dem Endlos-Antriebsstrang für zu fördernde Tragstrukturen wie Skids frei zu machen, kann es günstig sein, wenn Koppelglieder von dem Lasttrum in einer gegenüber der Arbeitsstellung verschwenkten Ruhestellung mitführbar sind.

Wenn es erforderlich ist, dass nicht immer alle Koppelglieder ihre Arbeitsstellung einnehmen, ist die Einschwenkeinrichtung vorzugsweise derart eingerichtet, dass Koppelglieder wahlweise aus ihrer Rücklaufstellung in die Arbeitsstellung bewegbar sind oder nicht.

Es ist günstig, wenn die Ausschwenkeinrichtung Führungselemente umfasst, durch welche die Koppelglieder die Schwenkbewegung zwangsgeführt durchführen. Auf diese Weise kann die Änderung der Stellung der Koppelglieder erfolgen, ohne dass hierzu zusätzliche Stellglieder erforderlich sind, die ihrerseits einen separaten Antrieb erfordern würden.

Bei der Einschwenkeinrichtung kann die wahlweise Verschwenkung von bestimmten Koppelgliedern durch ein Druckelement erreicht werden, durch welches eine Schwenkbewegung der Koppelglieder auslösbar ist.

Die Flexibilität im Hinblick auf förderbare Fahrzeugkarosserien wird erhöht, wenn der wenigstens eine Endlos-Antriebsstrang zumindest Koppelglieder einer ersten Art und Koppelglieder einer zweiten Art mit sich führt, die mit jeweils unterschiedlichen standardisierten Haltebauteilen von Fahrzeugkarosserien zusammenarbeiten können.

In der Praxis hat es sich bewährt, wenn die Koppelglieder als Auflagebolzen ausgebildet sind, wie sie bereits eingangs angesprochen wurden.

Es ist außerdem von Vorteil, wenn die Tragglieder als Auflageprofil für Auflagekufen eines Förderskids ausgebildet sind.

Eine sichere Förderung sowohl von Fahrzeugkarosserien als auch von Skids mit Fahrzeugkarosserien oder sonstigen Gegenständen ist besonders dann gewährleistet, wenn wenigstens zwei Führungseinrichtungen mit jeweils einem Endlos-Antriebsstrang vorhanden sind, deren-Lasttrums parallel zueinander verlaufen.

Im Hinblick auf die Anlage der eingangs genannten Art wird die oben genannte Aufgabe dadurch gelöst, dass
das Fördersystem eine Fördervorrichtung mit einigen oder allen der oben beschriebenen Merkmale umfasst.

Die Vorteile entsprechen den oben im Zusammenhang mit der Fördervorrichtung erläuterten Vorteilen.

Dabei ist es außerdem insbesondere vorteilhaft, wenn
a) die Behandlungszone eine erste Behandlungszone mit einem ersten Fördersystem ist und wenigstens eine weitere Behandlungszone vorhanden ist, welche ein zweites Fördersystem umfasst, das von dem ersten Fördersystem verschieden ist und mittels welchem die Fahrzeugkarosserie durch die zweite Behandlungszone förderbar ist;
b) in einem Übergabebereich zwischen der ersten Behandlungszone und der zweiten Behandlungszone eine Umsetzvorrichtung angeordnet ist, mittels welcher die Fahrzeugkarosserie von dem ersten Fördersystem an das zweite Fördersystem oder von dem zweiten Fördersystem an des erste Fördersystem übergeben werden kann.

Nachstehend wird ein Ausführungsbeispiel der Erfindung anhand der Zeichnungen näher erläutert. In diesen zeigen:
- Figur 1: eine perspektivische Ansicht einer Trockenzone, in der ein Tragkettenförderers mit Auflageprofilen für Skids und verschwenkbaren Tragbolzen für Fahrzeugkarosserien angeordnet ist, mittel welchem Fahrzeugkarosserien oder Gegenstände zwischen einem Eingangsbereich und einem Ausgangsbereich durch einen Trockentunnel gefördert werden;
- Figur 2: eine Seitenansicht der Trockenzone von Figur 1;
- Figur 3: eine Frontansicht auf den Ausgangsbereich der Trockenzone;
- Figur 4: eine Frontansicht auf den Trockentunnel, wobei eine Fahrzeugkarosserie auf Tragbolzen des Tragkettenförderers aufgesetzt ist;
- Figur 5: eine Ausschnittsvergrößerung eines Förderstranges des in Figur 4 gezeigten Tragkettenförderers;
- Figur 6: eine perspektivische Ausschnittsvergrößerung einer Förderkette des Tragkettenförderers aus einer anderen Blickrichtung;
- Figur 7: eine der Figur 4 entsprechende Frontansicht auf den Trockentunnel, wobei eine Fahrzeugkarosserie auf einem Skid befestigt ist, der auf Auflageprofile des Tragkettenförderers aufgesetzt ist;
- Figur 8: eine Ausschnittsvergrößerung eines Förderstranges des in Figur 7 gezeigten Tragkettenförderers;
- Figur 9: eine perspektivische Ansicht eines ersten Umlaufendes des Förderstranges nach den Figuren 5 oder 8, wobei eine Ausschwenkeinrichtung zum Verschwenken der Tragbolzen zu erkennen ist;
- Figuren 10A bis 10D: eine Frontansicht auf ein zweites Umlaufende des Förderstranges nach Figur 9, wobei eine Einschwenkeinrichtung zum Umschwenken der Tragbolzen zu erkennen und vier Phasen eines Schwenkvorgangs von Auflagebolzen gezeigt sind;
- Figur 11: schematisch eine Behandlungslinie einer Oberflächenbehandlungsanlage für Fahrzeugkarosserien mit verschiedenen Behandlungszonen, von denen einige einen Tragkettenförderer aufweisen, und Übergabebereichen, in denen Fahrzeugkarosserien an einen jeweiligen Tragkettenförderer übergeben oder von einem solchen entnommen werden.

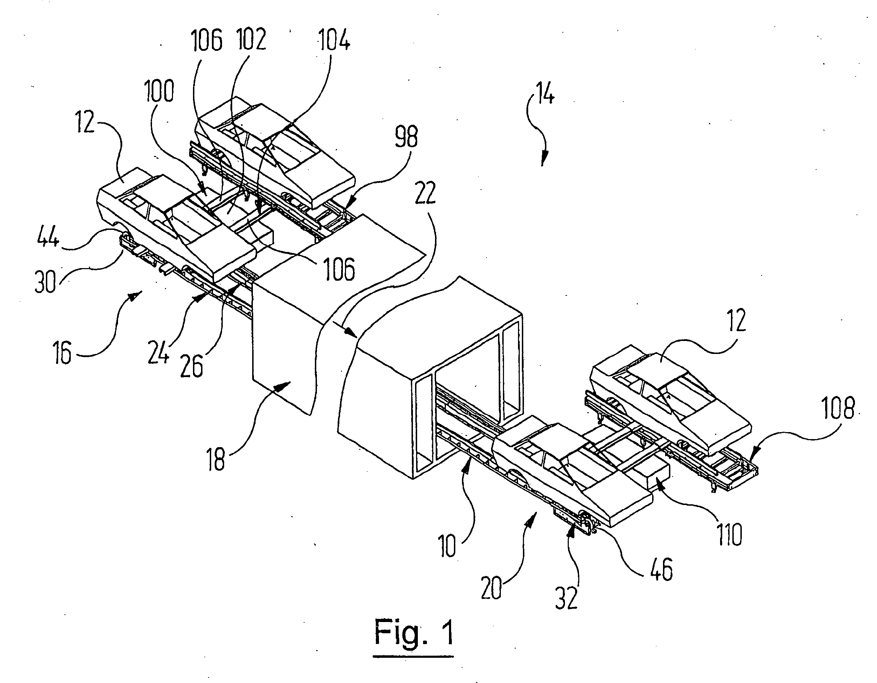

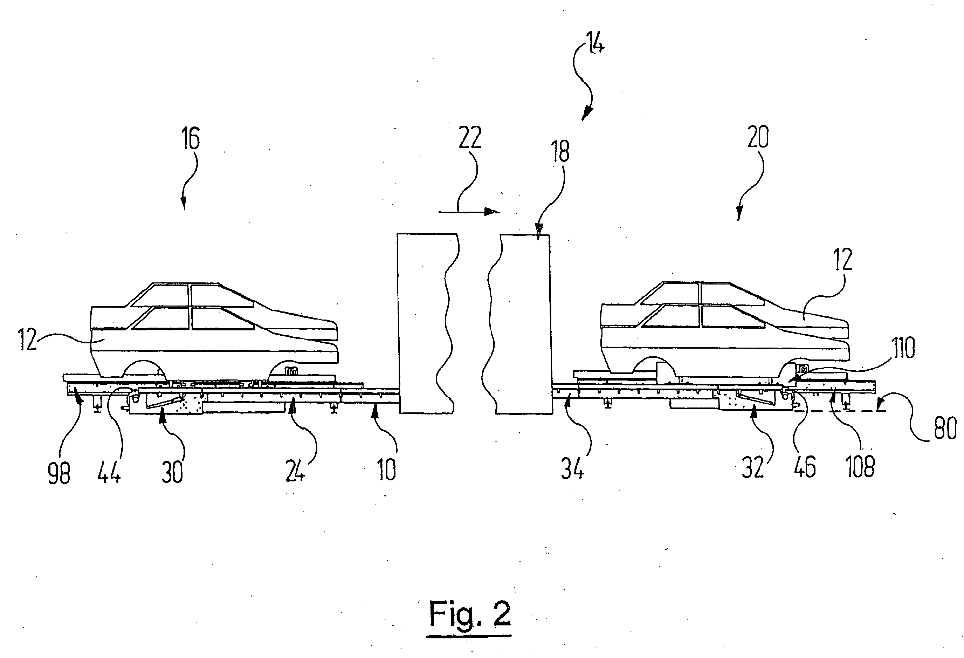

In den Figuren ist mit 10 ein Tragkettenförderer bezeichnet, mit dessen Hilfe Gegenstände, die am Beispiel von Fahrzeugkarosserien 12 verdeutlicht sind, beispielsweise durch eine Anlage zur Oberflächenbehandlung oder einzelne Behandlungszonen einer solchen Anlage gefördert werden sollen. Als Beispiel ist eine Trockenzone 14 gezeigt, in der die Fahrzeugkarosserien 12 oder andere hier nicht eigens gezeigte Gegenstände von einem Eingangsbereich 16 durch einen Trocknentunnel 18 zu einem Ausgangsbereich 20 gefördert werden. Die Fahrzeugkarosserien 12 werden auf dem Tragkettenförderer 10 in Richtung des Pfeils 22 gefördert, der nur in den Figuren 1, 2, 6 und 9 gezeigt ist.

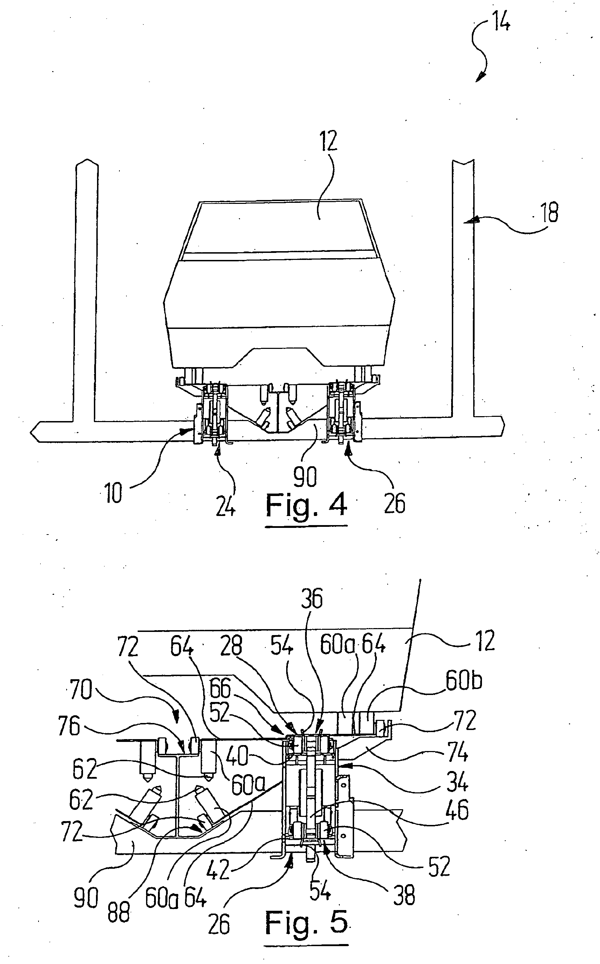

Der Tragkettenförderer 10 umfasst zwei parallel zueinander verlaufende Antriebseinheiten 24 und 26 für den Transport der Fahrzeugkarosserien 12. Die Antriebseinheiten 24, 26 sind bezogen auf eine parallel zu diesen verlaufende vertikale Ebene spiegelverkehrt aufgebaut, ansonsten jedoch baugleich und werden daher der Einfachheit halber nachstehend überwiegend am Beispiel der Antriebseinheit 26, welche in Förderrichtung 22 links angeordnet ist, und besonders anhand der Figuren 5, 6 und 8 beschrieben. Das dazu Gesagte gilt sinngemäß entsprechend für die Antriebseinheit 24.

Die Antriebseinheit 26 führt einen Endlos-Antriebsstrang in Form einer endlosen Förderkette 28, welche zwischen einem Lagerende 30 und einem Antriebsende 32 der Antriebseinheit 26 umläuft. Die Antriebseinheit 26 umfasst hierzu ein Führungsprofil 34 für die Förderkette 28, welches über mehrere nicht eigens mit einem Bezugszeichen versehene Stützstrukturen verankert ist.

Die Förderkette 28 bietet ein Lasttrum 36 und ein Leertrum 38, wobei das Lasttrum 36 auf einem oberen Zwischenboden 40 des Führungsprofils 34 aufliegt und das Leertrum 38 auf einem unteren Zwischenboden 42 des Führungsprofils 34 geführt wird.

Das Lasttrum 36 und das Leertrum 38 der Förderkette 28 erstrecken sich zwischen einem Umlenkritzel 44 am Lagerende 30 und einem Umlenkritzel 46 am Antriebsende 32 der Antriebseinheit 26. Die Umlenkritzel 44 und 46 sind somit jeweils Umlenkelemente und dabei um eine horizontale Drehachse verdrehbar gelagert, so dass die Förderkette 28 in einer vertikalen Ebene umläuft. Das Umlenkritzel 46 am Antriebsende 32 kann in an und für sich bekannter Weise angetrieben werden und ist mit dem entsprechenden Umlenkritzel der Antriebseinheit 24 gekoppelt, so dass die Förderkette 28 der Antriebseinheit 26 und die Förderkette der Antriebseinheit 24 synchronisiert umlaufen.

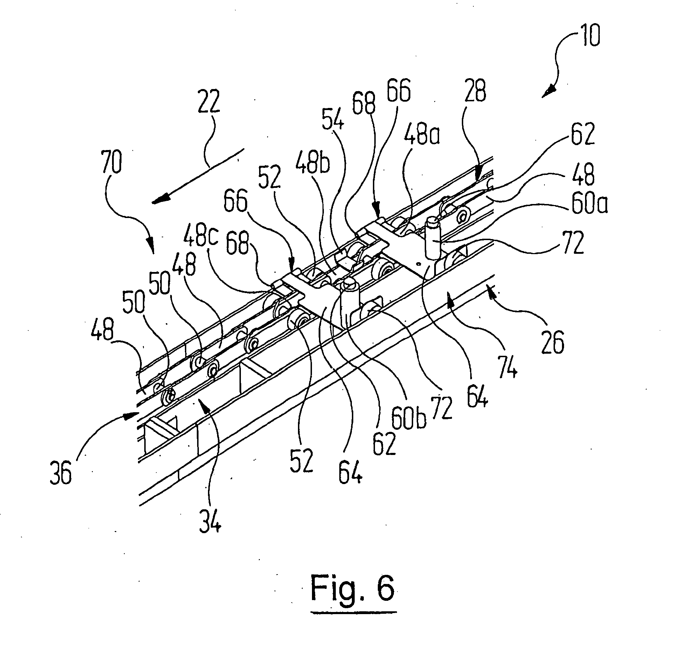

Wie besonders gut in Figur 6 zu erkennen ist, umfasst die Förderkette 28 eine Vielzahl von Kettengliedern 48, die in an und für sich bekannter Weise mittels frei drehbarer Achsbolzen 50 gelenkig miteinander verbunden sind. In den Figuren sind nicht alle Kettenglieder 48 oder Achsbolzen 50 mit einem Bezugszeichen versehen.

Zwischen besonderen lastaufnehmenden, in Förderrichtung 22 aufeinander folgenden Tragkettengliedern 48a, 48b, 48c ragen die zugehörigen Achsbolzen 50 seitlich über die Kettenglieder 48 über und lagern dort jeweils eine Laufrolle 52, mit denen diese Tragkettenglieder 48a, 48b, 48c und damit die Förderkette 28 auf dem oberen Zwischenboden 40 oder dem unteren Zwischenboden 42 des Führungsprofils 34 der Antriebseinheit 26 abrollen kann.

Das mittlere Tragkettenglied 48b umfasst als Tragglied ein Auflageprofil 54 mit U-förmigem Querschnitt, welches so von der Förderkette 28 mitgeführt wird, dass es im Lasttrum 36 nach oben hin sowie in und gegen die Förderrichtung 22 offen ist. Das Auflageprofil 54 arbeitet mit einer von zwei Auflagekufen 56 einer Tragstruktur in Form eines an und für sich bekannten Skids 58 zusammen, an welchem eine Fahrzeugkarosserie 12 oder andere Gegenstände, gegebenenfalls in Verbindung mit einem oder mehreren Werkstückträgern, in ebenfalls an und für sich bekannter Weise befestigt sein kann.

Hierzu ist das Auflageprofil 54 derart komplementär zu der Auflagekufe 56 des Skids 58 ausgebildet, dass diese auf das Auflageprofil 54 aufgelegt werden kann und der Skid durch die nach oben abragenden U-Schenkel des Auflageprofils 54 gegen eine Bewegung zur Seite gesichert ist.

Das Tragkettenglied 48a vor dem Tragkettenglied 48b mit dem Auflageprofil 54 führt als Koppelglied zu einer Fahrzeugkarosserie 12 einen Auflagebolzen 60a mit sich, der an seinem freien Ende einen Lagerkonus 62 umfasst. Der Auflagebolzen 60a ist in seinen Abmessungen und seiner Lage bezogen auf die Förderkette 28 so angepasst, dass er mit einem der standardisierten Haltebauteile der Fahrzeugkarosserien 12 zusammenarbeiten und insbesondere mit dem Lagerkonus 62 bereichsweise in eine hierzu vorgesehene Durchgangsöffnung eingreifen kann.

Der Auflagebolzen 60a ist von einem Schwenkelement in Form einer Schwenkplatte 64 getragen, die an einem Ende über ein Gelenk 66 um eine Schwenkachse 68 verschwenk- oder verkippbar mit dem Tragkettenglied 48a verbunden ist, wobei nachstehend einheitlich der Begriff schwenken verwendet wird. Dabei ist die Schwenkachse 68 auf der zur gegenüberliegenden Antriebseinheit 24 weisenden Innenseite neben der Förderkette 28, d.h. hier neben dem Tragkettenglied 48a, angeordnet und verläuft parallel zur Förderrichtung 22, wenn sich das entsprechende Tragkettenglied 48a im Lasttrum 36 oder im Leertrum 38 der Tragkette 28 befindet.

Der Auflagebolzen 60a bzw. die zugehörige Schwenkplatte 64 kann hierdurch im Lasttrum 36 der Förderkette 28 zwischen einer Arbeitsstellung, in welcher eine Fahrzeugkarosserie 12 aufgenommen werden kann, und einer Ruhestellung verschwenkt werden. Wenn der Auflagebolzen 60a und die Schwenkplatte 64 die Arbeitsstellung einnehmen, verläuft die Schwenkplatte 64 ausgehend von dem Gelenk 66 quer über das Tragkettenglied 48a und über dieses hinaus, wobei der Auflagebolzen 60a nach oben von der Schwenkplatte 64 abragt. In der Ruhestellung des Auflagebolzens 60a im Bereich des Lasttrums 36 der Förderkette 28 ist die Schwenkplatte 64 in den Bereich des Tragkettenförderers 10 zwischen den Antriebseinheiten 24, 26 hinein geschwenkt, wobei der Auflagebolzen 60a nach unten ragt; dieser Bereich zwischen den Antriebseinheiten 24, 26 bildet einen Führungsbereich 70.

An ihrem von dem Gelenk 66 abliegenden Ende lagert die Schwenkplatte 64 eine Stützrolle 72, die um eine Achse verdrehbar gelagert ist, die senkrecht zur Gelenkachse 68 verläuft. Das Führungsprofil 34 der Antriebseinheit 26 umfasst eine erste Laufschiene 74 mit einer horizontalen Lauffläche, die sich auf der Außenseite parallel neben der Förderkette 28 erstreckt. Diese Laufschiene 74 ist derart angeordnet und dimensioniert, dass die Stützrolle 72 auf der horizontalen Lauffläche der Laufschiene 74 aufliegt, wenn der Auflagebolzen 60a bzw. die zugehörige Schwenkplatte 64 die Arbeitsstellung einnimmt.

Im Führungsbereich 70 verläuft eine zweite Laufschiene 76 parallel zur Förderkette 28, die ebenfalls eine horizontale Lauffläche umfasst und in den Figuren 4, 5, 7 und 8 zu erkennen ist. Die Laufschiene 76 ist derart angeordnet und dimensioniert, dass die Stützrolle 72 auf der horizontalen Lauffläche der Laufschiene 76 aufliegt, wenn der Auflagebolzen 60a bzw. die zugehörige Schwenkplatte 64 die Ruhestellung einnimmt.

Das Tragkettenglied 48c, das in Förderrichtung 22 hinter dem Tragkettenglied 48b mit dem Auflageprofil 54 angeordnet ist, führt als Koppelglied zu einer Fahrzeugkarosserie 12 einen Auflagebolzen 60b mit sich. Dieser Auflagebolzen 60b trägt wie der Auflagebolzen 60a an seinem freien Ende einen Lagerkonus 62 und ist entsprechend über eine Schwenkplatte 64 und ein Gelenk 66 um eine Schwenkachse 68 verschwenkbar mit dem Tragkettenglied 48c verbunden.

Der Auflagebolzen 60b ist so auf der ihm zugeordneten Schwenkplatte 64 angeordnet und derart dimensioniert, dass er mit standardisierten Haltebauteilen an anderen Fahrzeugkarosserien 12 zusammenarbeiten kann als der Auflagebolzen 60a. Ansonsten gilt das oben zum Auflagebolzen 60a Gesagte sinngemäß entsprechend auch für den Auflagebolzen 60b.

So können die Auflagebolzen 60a z.B. mit standardisierten Haltebauteilen im Frontbereich einer bestimmten Fahrzeugkarosserie 12 zusammenarbeiten, während die Auflagebolzen 60b zu standardisierten Haltebauteilen im Heckbereich dieser Fahrzeugkarosserie 12 passen. Für andere Fahrzeugkarosserien 12 können beispielsweise vorne die Auflagebolzen 60b und hinten die Auflagebolzen 60a benötigt werden, oder eine Fahrzeugkarosserie 12 arbeitet nur mit vier Auflagebolzen 60a oder nur mit vier Auflagebolzen 60b zusammen.

Abhängig von der Art der zu fördernden Fahrzeugkarosserie 12 befindet sich im Lasttrum 36 der Förderkette 28 somit wahlweise der bei der entsprechenden Gruppe von Tragkettengliedern 48a, 48b, 48c gelagerte Auflagebolzen 60a oder 60b in seiner Arbeitsstellung, der jeweils nicht benötige Auflagebolzen 60a, 60b nimmt dagegen seine Ruhestellung ein.

Die Anzahl von Kettengliedern 48 zwischen zwei benachbarten und einer bestimmten Fahrzeugkarosserie 12 zugeordneten Tragkettenglieder 48a bzw. 48c bzw. zwei benachbarten und zusammengehörenden Auflagebolzen 60a bzw. 60b ist stets so gewählt, dass zwei benachbarte und zusammengehörende Auflagebolzen 60a, 60b zu zwei entsprechenden Haltebauteilen der Fahrzeugkarosserie 12 passen. Der Abstand zwischen zwei solchen Paaren von Auflagebolzen 60a, 60b auf einer Förderkette 28 kann im Laufe der Lebensdauer der Förderkette 28 gegebenenfalls durch Entnahme von Kettengliedern 48 verändert werden, um Längenänderungen der Förderkette 28 Rechnung zu tragen, die sich während des Betriebs ergeben.

Grundsätzlich sollte jeweils ein Auflagebolzen 60a oder 60b jeder Förderkette 28 in ein Haltebauteil der Fahrzeugkarosserie 12 eingreifen. Jeder zweite Auflagebolzen 60a oder 60b jeder Förderkette 10 kann anstelle des Lagerkonus 62 eine Auflageplatte tragen, auf welcher die Fahrzeugkarosserie 4 beispielsweise mit ihrem jeweiligen Schweller aufliegen kann. Auf diese Weise können Fertigungstoleranzen der Fahrzeugkarosserie 12 oder die oben angesprochenen Längenänderungen der Förderketten 28 ausgeglichen werden.

In den Figuren 4 und 5 ist eine Fahrzeugkarosserie 12 gezeigt, die direkt auf den Auflagebolzen 60a, 60b aufliegt, wobei nicht benötigte Auflagebolzen 60a in ihrer Ruhestellung von der Förderkette 28 mitgeführt werden, ebenso wie nicht benötigte Auflagebolzen 60b, die jedoch der Übersichtlichkeit halber nicht gezeigt sind.

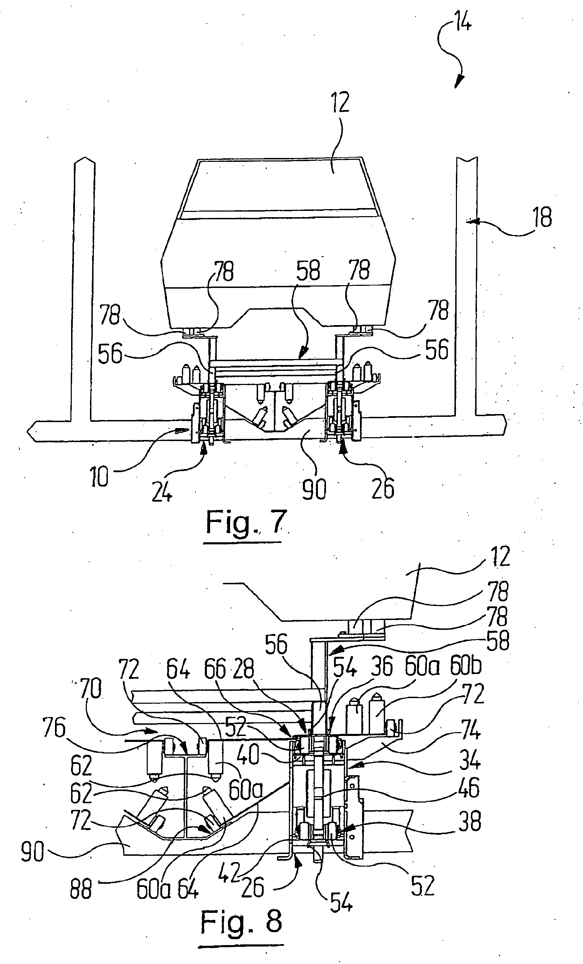

Wie oben erläutert wurde, kann der Tragkettenförderer 10 Fahrzeugkarosserien 12 oder andere Gegenstände auch auf einem Skid 58 fördern, indem dieser auf die Auflageprofile 54 aufgelegt wird. Dies ist in den Figuren 7 und 8 gezeigt. Der Skid 58 umfasst hierzu Auflagebolzen 78, die in Anordnung und Dimension den Auflagebolzen 60a, 60b entsprechen. Wie in den Figuren 7 und 8 zu sehen ist, können die Auflagebolzen 60a, 60b bei einer Skidförderung entweder in ihrer Arbeitsstellung oder in ihrer Ruhestellung von dem Lasttrum 36 der Förderkette 28 mitgeführt werden.

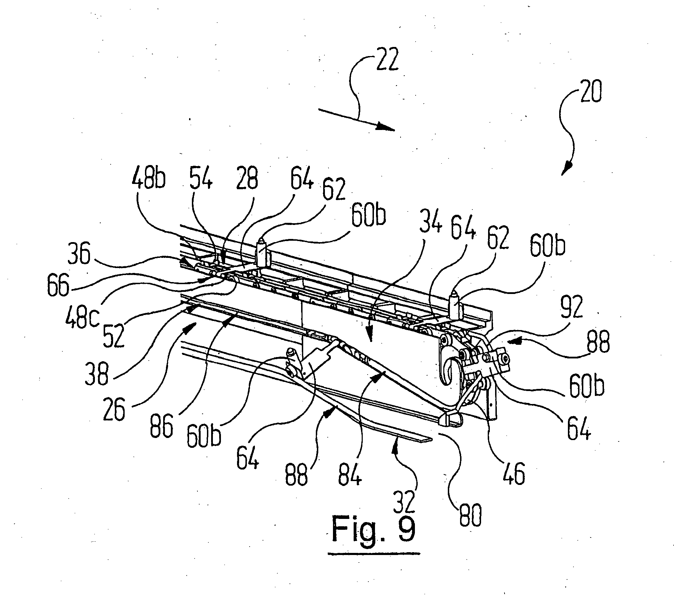

Die Antriebseinheiten 24 und 26 sind so niedrigbauend wie möglich ausgebildet, wobei die minimale Bauhöhe durch die Umlenkritzel 44 und 46 am Lagerende 30 und am Antriebsende 32 vorgegeben ist. Wie besonders in Figur 9 zu erkennen ist, ist der Abstand von dem Umlenkritzel 46 am Antriebsende 32 zum mit 80 gekennzeichneten Boden so gering, dass die Auflagebolzen 60a, 60b in Kontakt mit dem Boden 80 kämen, wenn sie beim Umlauf um das Umlenkritzel 46 ihre Arbeitsstellung beibehalten und im Leertrum 36 schließlich nach unten abragen würden.

Daher ist am Antriebsende 32 der Antriebseinheit 26 eine Ausschwenkeinrichtung 82 vorhanden, mittels welcher Auflagebolzen 60a, 60b, die in ihrer Arbeitsstellung zu dem Umlenkritzel 46 gelangen, in eine Rücklaufstellung überführt werden.

In dieser Rücklaufstellung sind die Schwenkplatten 64 in den Führungsbereich 70 zwischen den Antriebseinheiten 24 und 26 hinein geschwenkt, so dass die Auflagebolzen 60a, 60b im Leertrum 38 in Richtung vom Boden 80 weg nach oben weisen.

Wie in Figur 9 zu erkennen ist, wird das Leertrum 38 der Förderkette 28 in an und für sich bekannter Weise über einen in Laufrichtung nach oben geneigten Führungsabschnitt 84 in eine so genannte Einschnürung 86 geleitet, in welcher der Abstand zwischen dem Boden 80 und der Förderkette 28 größer ist als zwischen dem Boden 80 und den Umlaufritzeln 46, 48. Wenn die Schwenkplatten 64 dort horizontal verlaufen und die Auflagebolzen 60a, 60b vertikal nach oben ragen würden, käme es zu einer Kollision der Auflagebolzen 60a, 60b im Leertrum mit den Auflagebolzen 60a, 60b, die im Lasttrum ihre Ruhestellung einnehmen und vertikal nach unten abragen.

Um dies zu verhindern, ist im Führungsbereich 70 jeder Antriebseinheit 24, 26 eine dritte Laufschiene 88 zugeordnet, die in eine Bodenisolierung 90 des Trockentunnels 18 integriert ist. Diese dritte Laufschiene 88 bietet eine Lauffläche für die Laufrollen 72 an den Schwenkplatte 64, die zumindest in der Einschnürung 86 gegenüber einer Horizontalen geneigt ist. Die dritte Laufschiene 88 bzw. deren Lauffläche ist derart angeordnet und dimensioniert, dass die Schwenkplatten 64 von dem zugehörigen Gelenk 66 nach unten geneigt in den Führungsbereich 70 hinein ragen, so dass die Auflagebolzen 60a, 60b im Leertrum 38 aus dem Kollisionsbereich zu den Auflagebolzen 60a, 60b in der Ruhestellung im Leertrum 36 heraus bleiben.

Die Ausschwenkeinrichtung 82 nun ist beim vorliegenden Ausführungsbeispiel als eine Art Kulissenführung ausgebildet und umfasst hierzu eine gebogen Leitstrebe 92, welche an der Umlaufseite des Umlenkritzels 46 angeordnet sind. Die Leitstrebe 92 verläuft derart, dass Schwenkplatten 64 zwangsgeführt aus der Arbeitsstellung heraus geschwenkt und in den Führungsbereich 70 zwischen den Antriebseinheiten 24, 26 hinein in die Rücklaufstellung geschwenkt werden. Die Leitstrebe 92 ist dabei derart ausgebildet, dass Schwenkplatten 64, die im Lasttrum 36 der Förderkette 28 die Ruhestellung einnehmen, ohne ein Verschwenken um die Schwenkachse 68 herum um das Umlenkritzel 46 umlaufen und so ohne weiteren Einfluss von der Ruhestellung in die Rücklaufstellung um Leertrum 38 gelangen.

Am gegenüberliegenden Lagerende 30 der Antriebseinheit 26 müssen nun diejenigen Auflagebolzen 60a, 60b, die für den Transport einer bestimmten Fahrzeugkarosserie 12 im Lasttrum 38 der Förderkette 28 in ihrer Arbeitsstellung benötigt werden, wieder aus ihrer Rücklaufstellung in die Arbeitsstellung verschwenkt werden.

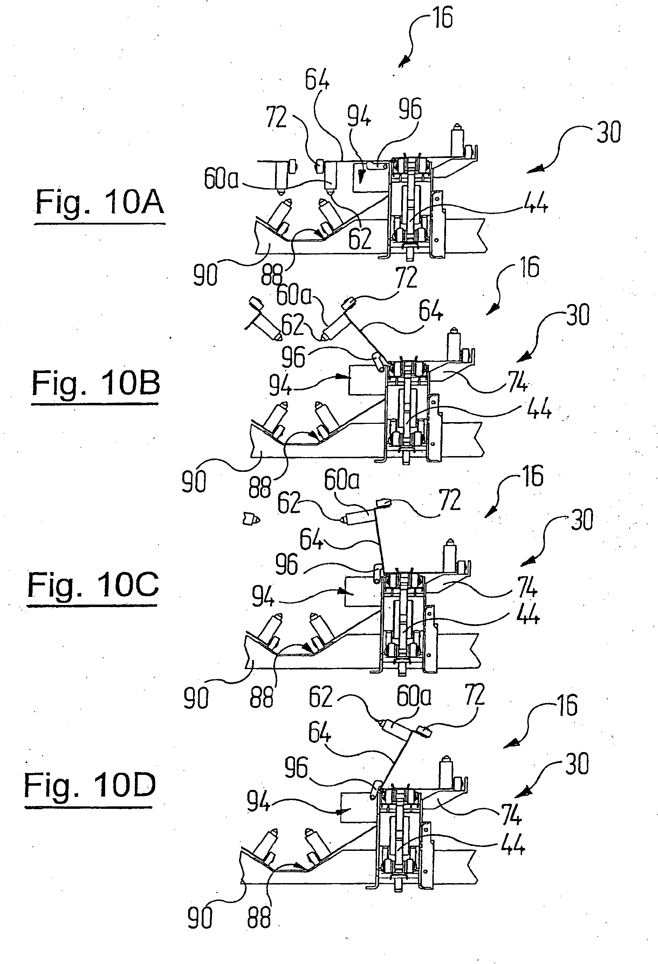

Hierzu ist am Lagerende 30 eine Einschwenkeinrichtung 94 vorhanden, die in den Figuren 10A bis 10D gezeigt ist und mittels welcher wahlweise und selektiv bestimmte Schwenkplatten 64 aus der Rücklaufstellung in die Arbeitsstellung überführt werden können.

Zu diesem Zweck umfasst die Einschwenkeinrichtung 94 als Druckelement einen Schwenkstößel 96, der motorisch, hydraulisch oder pneumatisch betrieben werden kann und von unten gegen die Schwenkplatten 64 andrücken und diese nach oben verschwenken kann, wenn die Schwenkplatten 64 sich nach dem Umlauf der Förderkette 28 um das Umlenkritzel 44 am Lagerende 30 der Antriebseinheit 26 wieder im Lasttrum 36 befinden. Hierdurch wird eine betreffende Schwenkplatte 64 aus ihrer Rücklaufstellung in ihre Arbeitsstellung verschwenkt. In den Figuren 10A bis 10D sind vier Phasen eines solchen Einschwenkvorgangs in einer Frontansicht gezeigt. In der in Figur 10D gezeigten Stellung hat die Schwenkplatte 64 einen Umschlagpunkt überschritten, woraufhin sie auf Grund der Schwerkraft nach unten fällt. An dieser Stelle kann in die erste Laufschiene 74 ein Dämpfer integriert sein, um das Aufschlagen der Laufrolle 72 an der entsprechenden Schwenkplatte 64 auf die Laufschiene 74 abzupuffern.

Wenn der Schwenkstößel 96 nicht betätigt wird, wird eine Schwenkplatte 64 ohne Bewegung über den Schwenkstößel 96 hinweg geführt und wird in ihrer Ruhestellung vom Lasttrum 36 der Förderkette 28 mitgeführt.

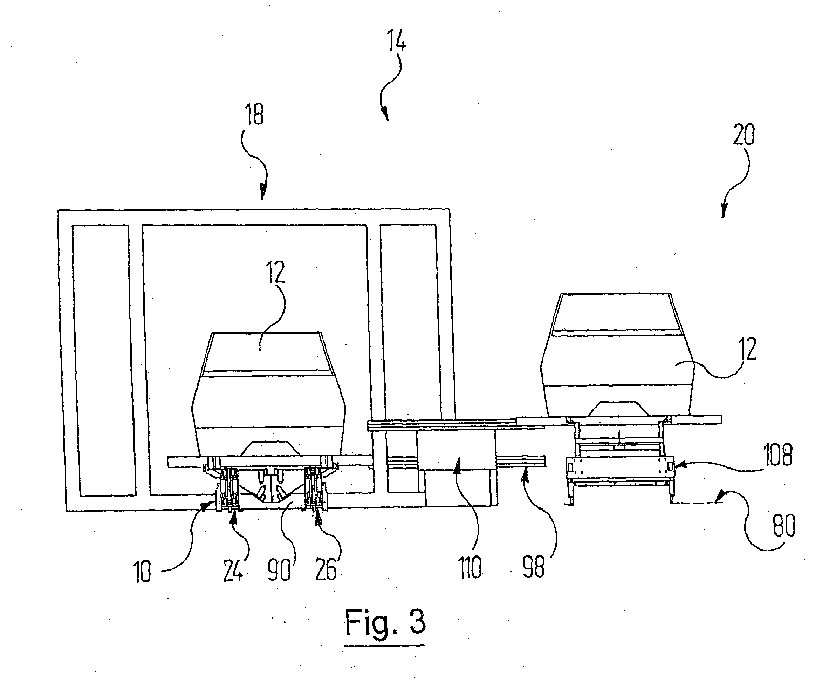

Wie in den Figuren 1 bis 3 zu erkennen ist, ist im Eingangsbereich 16 der Trockenzone 14 ein Zuführförderer 98 in Form eines Rollenbahnförderers angeordnet, der parallel zum Tragkettenförderer 10 verläuft und Fahrzeugkarosserien 12 auf Skids 58 zur Trockenzone 14 fördert, die von vorhergehenden Arbeitstationen kommen.

Um eine Fahrzeugkarosserie 12 von dem Zuführförderer 98 auf den Tragkettenförderer 10 zu überführen, ist zwischen diesen eine Umsetzvorrichtung 100 angeordnet, die einen heb- und senkbaren Fördertisch 102 umfasst, auf dessen Oberseite außerdem ein Gabelschlitten 104 mit zwei Tragzinken 106 senkrecht zur Förderrichtung 22 verfahren werden kann.

Der Gabelschlitten 104 kann sowohl eine Fahrzeugkarosserie 12 ohne Skid 58 als auch einen Skid 58, an dem eine Fahrzeugkarosserie 12 oder andere Gegenstände befestigt sind, von dem Zuführförderer 98 aufnehmen und an den Tragkettenförderer 10 übergeben.

In ersterem Fall fährt der Gabelschlitten 104 in den Zwischenraum zwischen dem Skid 58 und der Fahrzeugkarosserie 12 ein und hebt diese vom Skid 58 ab. Wenn ein Skid 58 mit Fahrzeugkarosserie 12 oder anderen Gegenständen übergeben werden soll, fährt der Gabelschlitten 104 entsprechend in den Zwischenraum zwischen dem Rollenbahnförderer 98 und dem Skid 58 ein, der dann als Ganzes von dem Rollenbahnförderer 98 abgehoben wird.

Dann fährt der Gabelschlitten 104 die Fahrzeugkarosserie 12 oder den Skid 58 über den Tragkettenförderer 10 und setzt die Fahrzeugkarosserie 12 oder den Skid 58 darauf ab. Dieses Absetzen kann einerseits bei stillstehenden Förderketten 28 erfolgen. Wenn der Fördertisch 102 in und gegen die Förderrichtung 22 bewegbar ausgebildet ist, kann dieser mit den Förderketten 28 mitfahren und die Fahrzeugkarosserie 12 oder den Skid 58 auf den Tragkettenförderer 10 absetzen, ohne dass der Antrieb der Förderketten 28 unterbrochen werden muss. In diesem Fall ist somit ein kontinuierlicher Betrieb möglich.

Im Ausgangsbereich 20 der Trockenzone 14 ist in entsprechender Weise ein Abgabeförderer 108 in Form eines weiteren Rollenbahnförderers vorhanden, dem Fahrzeugkarosserien 12 oder Skids 58 mit Fahrzeugkarosserien 12 mit Hilfe einer zweiten Umsetzvorrichtung 110 von dem Tragkettenförderer 10 übergeben werden können. Die Umsetzvorrichtung 110 ist baugleich zur Umsetzvorrichtung 100.

Das Abnehmen einer Fahrzeugkarosserie 12 oder eines Skids 58 mit Fahrzeugkarosserie 12 kann auch hier bei stillstehenden Förderkette 28 oder bei deren Umlauf erfolgen, wenn die Umsetzvorrichtung 110 entsprechend für eine Bewegung in und gegen die Förderrichtung 22 eingerichtet ist.

Bei einer nicht eigens gezeigten Abwandlung können die Tragzinken 106 der Umsetzvorrichtung 110 im Ausgangsbereich 20 der Trockenzone 14 dabei dazu genutzt werden, die zugehörigen Auflagebolzen 58 in deren Ruhestellung zu überführen, während sich die Auflagebolzen 58 noch im Lasttrum 36 der Förderketten 28 befinden. Diese laufen dann in dieser Stellung um das Umlenkritzel 46 am Antriebsende 32 der Antriebseinheiten 24, 26 und gelangen so automatisch in der Rücklaufstellung zum jeweiligen Leertrum 38.

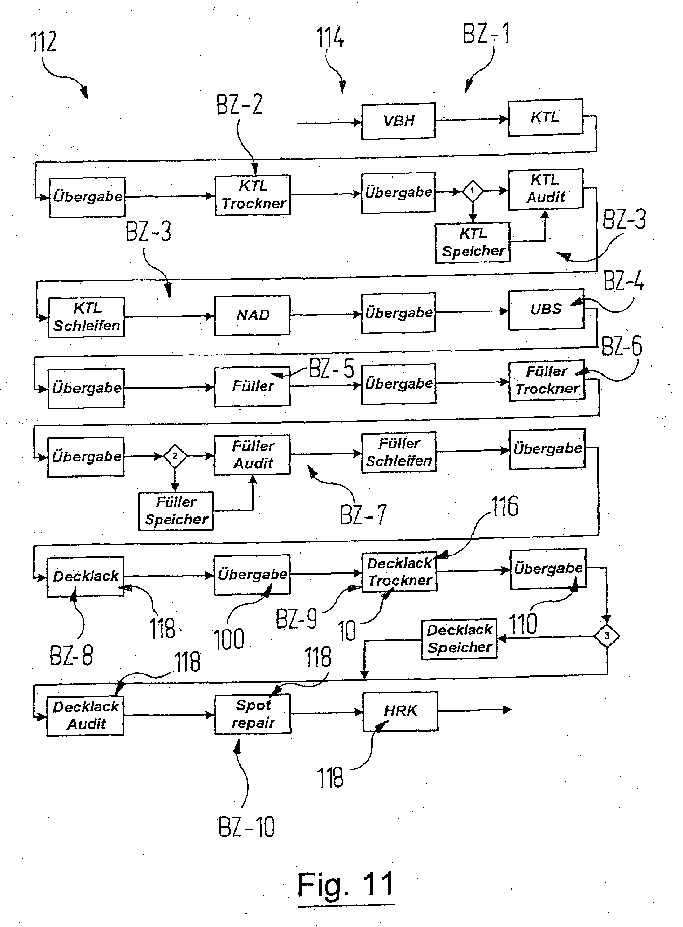

Figur 11 zeigt beispielhaft eine Behandlungslinie 112 in Form eines Anlagenschemas einer Oberflächenbehandlungsanlage für Fahrzeugkarosserien 12, welches insgesamt mit 114 bezeichnet ist und welcher die Fahrzeugkarosserien 12 vom Rohbau kommend zugeführt werden. Die Oberflächenbehandlungsanlage 114 umfasst verschiedene Behandlungszonen BZ, die gegebenenfalls in Behandlungsbereiche BB unterteilt sind und zwischen denen jeweils ein Übergabebereich angeordnet ist. Im Einzelnen sind dies die folgenden Behandlungszonen BZ und Behandlungsbereiche BB, wobei in Figur 11 der Übersichtlichkeit halber nur die Behandlungszonen BZ als solche gekennzeichnet sind:
BZ-1 BB-1 Vorbehandlung (VBH, z.B. ein oder mehrere Tauchbecken)
   BB-2 Kataphoretische Tauchlackierung (KTL) Übergabebereich (Übergabe)
BZ-2 KTL-Trockner Übergabebereich
BZ-3 BB-1 KTL-Audit
   BB-2 KTL-Schleifen
   BB-3 Nahtabdichten (NAD)
   Übergabebereich
BZ-4 Unterbodenschutz (UBS)
   Übergabebereich
BZ-5 Füller
   Übergabebereich
BZ-6 Füller-Trockner
   Übergabebereich
BZ-7 BB-1 Füller-Audit
BB-2 Füller-Schleifen
   Übergabebereich
BZ-8 Decklack
   Übergabebereich
BZ-9 Decklack-Trockner
   Übergabebereich
BZ-10 BB-1 Decklack-Audit
   BB-2 Spot-Repair
   BB-3 Hohlraumkonservierung (HRK).

Nach der Hohlraumkonservierung werden die Fahrzeugkarosserien 12 zur Endmontage gefördert. Die Oberflächenbehandlungsanlage 114 kann auch von dem in Figur 11 gezeigten Anlagenschema abweichen und sowohl weitere als auch weniger und/oder andere Behandlungszonen BZ und Behandlungsbereiche BB umfassen.

An mit 1, 2 und 3 bezeichneten Knotenpunkten können Fahrzeugkarosserien 12 aus der Behandlungslinie 112 herausgenommen und in den Bereichen KTL-Speicher, Füller-Speicher und Decklack-Speicher als Produktionspuffer zwischengelagert werden.

In zwei in der Behandlungslinie 112 aufeinander folgenden Behandlungszonen BZ können nun voneinander verschiedenen Fördersysteme vorhanden sein, mit deren Hilfe die Fahrzeugkarosserien 12 durch die jeweiligen Behandlungszonen BZ hindurch gefördert werden.

So kann beispielsweise in der Behandlungszone BZ-9, in welcher der Decklack getrocknet wird, als Fördersystem 116 ein Tragkettenförderer 10 vorhanden sein, um die Fahrzeugkarosserien 12 ohne Skid 58 durch die Behandlungszone BZ-9 zu bewegen.

In der Behandlungszone BZ-8, in welcher der Decklack vor dem Trocknen aufgetragen wird, oder in der Behandlungszone BZ-10, in welcher der Decklack nach dem Trocknen überprüft und eine Hohlraumkonservierung durchgeführt wird, kann dagegen ein Fördersystem 118 in Form eines Rollenbahnförderer vorhanden sein, welcher dem Zuführförderer 98 oder dem Abgabeförderer 108 entspricht und auf welchem die Fahrzeugkarosserien 12 auf einem Skid 58 gefördert werden.

In dem Übergabebereich zwischen den Behandlungszonen BZ-8 und BZ-9, befindet sich dann eine Umsetzvorrichtung 100, um die Fahrzeugkarosserien 12 von dem Skid 58 abzuheben und an den Tragkettenförderer 10 zu übergeben. In dem Übergabebereich zwischen den Behandlungszonen BZ-9 und BZ-10 ist dementsprechend eine Umsetzvorrichtung 110 angeordnet, mittels welcher die Fahrzeugkarosserien 12 von dem Tragkettenförderer 10 wieder auf einen Skid 58 auf dem Rollenbahnförderer 118 übergeben werden können.

Allgemein kann immer dort, wo es ungünstig ist, wenn der Skid 58 dieselbe Behandlung erfährt, wie die Fahrzeugkarosserie 12, ein Tragkettenförderer 10 in einer Behandlungszone BZ vorgesehen sein. Dort, wo ein Wechsel zwischen zwei Fördersystemen notwendig ist, befindet sich dann entsprechend eine Umsetzvorrichtung 100 bzw. 110.

Bei der in Figur 11 veranschaulichten Behandlungslinie 112 können beispielsweise auch in den Behandlungszonen BZ-2, BZ-4, und BZ-6 als Fördersystem Tragkettenförderer 10 vorhanden sein, die mit Umsetzvorrichtungen 100 und 110 in Förderrichtung vor und hinter der jeweiligen Behandlungszone zusammenarbeiten.

## Patentansprüche

1. Vorrichtung zum Fördern von Gegenständen mit
a) wenigstens einem Endlos-Antriebsstrang (28), der ein Lasttrum (36) und ein Leertrum (38) ausbildet und eine Förderrichtung (22) vorgibt;
b) einer Führungseinrichtung (24, 26) für den wenigstens einen Endlos-Antriebsstrang (28), die ein erstes Umlenkelement (44) und wenigstens ein zweites Umlenkelement (46) umfasst, über welche der wenigstens eine Endlos-Antriebsstrang (28) umläuft,
wobei
c) der wenigstens eine Endlos-Antriebsstrang (28) eine Mehrzahl von Traggliedern (54) mit sich führt, die derart angeordnet und eingerichtet sind, dass sie mit Tragstrukturen (58) zusammenarbeiten können, an welchen wenigstens ein Gegenstand befestigbar ist,
**dadurch gekennzeichnet, dass**
d) der wenigstens eine Endlos-Antriebsstrang (28) außendem eine Mehrzahl von Koppelgliedern(60a, 60b) mit sich führt, die derart angeordnet und eingerichtet sind, dass sie mit standardisierten Haltebauteilen von Fahrzeugkarosserien (12) zusammenarbeiten können.

2. Vorrichtung nach Anspruch 1, **dadurch gekennzeichnet, dass**
a) die Koppelglieder (60a, 60b) um eine Schwenkachse (68) verschwenkbar mit dem Endlos-Antriebsstrang (28) verbunden sind;
b) die Koppelglieder (60a, 60b) von dem Lasttrum (36) in einer Arbeitsstellung und von dem Leertrum (38) in einer gegenüber der Arbeitstellung verschwenkten Rücklaufstellung mitführbar sind;
c) an einem ersten Ende (30) des Endlos-Antriebsstranges (28) eine Einschwenkeinrichtung (94) vorhanden ist, mittels welcher Koppelglieder (60a, 60b) aus der Rücklaufstellung in die Arbeitsstellung überführbar sind;
d) an einem zweiten Ende (32) des Endlos-Antriebsstrangs (28) eine Ausschwenkeinrichtung (82) vorhanden ist, mittels welcher Koppelglieder (60a, 60b) aus der Arbeitsstellung in die Rücklaufstellung überführbar sind.

3. Vorrichtung nach Anspruch 2, **dadurch gekennzeichnet, dass** die Schwenkachse (68) parallel zu der Förderlichtung (22) verläuft.

4. Vorrichtung nach Anspruch 2 oder 3, **dadurch gekennzeichnet, dass** jedes Koppelglied (60a, 60b) von einem Schwenkelement (64) getragen ist, das an einem Ende über ein Schwenkgelenk (66) mit dem Endlos-Antriebsstrang (28) verbunden ist.

5. Vorrichtung nach einem der Ansprüche 2 bis 4, **dadurch gekennzeichnet, dass** die Schwenkachse (68) in einem Bereich neben dem Endlos-Antriebsstrang (28) angeordnet ist.

6. Vorrichtung nach einem der Ansprüche 2 bis 5, **dadurch gekennzeichnet, dass** die Ausschwenkeinrichtung (82) und die Einschwenkeinrichtung (94) derart eingerichtet sind, dass Koppelglieder (60a, 60b) von dem Lasttrum (36) in einer gegenüber der Arbeitsstellung verschwenkten Ruhestellung mitführbar sind.

7. Vorrichtung nach Anspruch 6, **dadurch gekennzeichnet, dass** die Einschwenkeinrichtung (94) derart eingerichtet ist, dass Koppelglieder (60a, 60b) wahlweise aus ihrer Rücklaufstellung in die Arbeitsstellung bewegbar sind oder nicht.

8. Vorrichtung nach einem der Ansprüche 2 bis 7, **dadurch gekennzeichnet, dass** die Ausschwenkeinrichtung (82) Führungselemente (92a, 92b, 92c) umfasst, durch welche die Koppelglieder (60a, 60b) die Schwenkbewegung zwangsgeführt durchführen.

9. Vorrichtung nach einem der Ansprüche 2 bis 8, **dadurch gekennzeichnet, dass** die Einschwenkeinrichtung (94) ein Druckelement (96) umfasst, durch welches eine Schwenkbewegung der Koppelglieder (60a, 60b) auslösbar ist.

10. Vorrichtung nach einem der Ansprüche 1 bis 9, **dadurch gekennzeichnet, dass** der wenigstens eine Endlos-Antriebsstrang (28) zumindest Koppelglieder (60a) einer ersten Art und Koppelglieder (60b) einer zweiten Art mit sich führt, die mit jeweils unterschiedlichen standardisierten Haltebauteilen von Fahrzeugkarosserien (12) zusammenarbeiten können.

11. Vorrichtung nach einem der Ansprüche 1 bis 10, **dadurch gekennzeichnet, dass** die Koppelglieder (60a, 60b) als Auflagebolzen ausgebildet sind.

12. Vorrichtung nach einem der Ansprüche 1 bis 11, **dadurch gekennzeichnet, dass** die Tragglieder (54) als Auflageprofil für Auflagekufen (56) eines Förderskids (58) ausgebildet sind.

13. Vorrichtung einem der Ansprüche 1 bis 12, **dadurch gekennzeichnet, dass** wenigstens zwei Führungseinrichtungen (24, 26) mit jeweils einem Endlos-Antriebsstrang (28) vorhanden sind, deren Lasttrums (36) parallel zueinander verlaufen.

14. Anlage zur Oberflächenbehandlung von Gegenständen mit wenigstens einer Behandlungszone (BZ-1 bis BZ-10), welche ein Fördersystem (116) umfasst, mittels welchem ein Gegenstand (12) durch die wenigstens eine Behandlungszone (BZ-1 bis BZ-10) förderbar ist,
**dadurch gekennzeichnet, dass**
das Fördersystem (116) eine Vorrichtung (10) nach einem der An-sprüche 1 bis 13 umfasst.

15. Anlage nach Anspruch 14, **dadurch gekennzeichnet, dass**
a) die Behandlungszone (BZ-1 bis BZ-10) eine erste Behandlungszone mit einem ersten Fördersystem (116) ist und wenigstens eine weitere Behandlungszone (BZ-1 bis BZ-10) vorhanden ist, welche ein zweites Fördersystem (118) umfasst, das von dem ersten Fördersystem (116) verschieden ist und mittels welchem die Fahrzeugkarosserie (12) durch die zweite Behandlungszone (BZ-1 bis BZ-10) förderbar ist;
b) in einem Übergabebereich zwischen der ersten Behandlungszone (BZ-1 bis BZ-10) und der zweiten Behandlungszone (BZ-1 bis BZ-10) eine Umsetzvorrichtung (100, 110) angeordnet ist, mittels welcher die Fahrzeugkarosserie (12) von dem ersten Fördersystem (116) an das zweite Fördersystem (118) oder von dem zweiten Fördersystem (118) an des erste Fördersystem (116) übergeben werden kann.

## Claims

1. A device for conveying objects having:
a) at least one continuous drive train (28) which forms a load-bearing strand (36) and a return strand (38) and specifies a conveying direction (22) ;
b) a guide device (24, 26) for the at least one continuous drive train (28), which comprises a first deflecting element (44) and at least one second deflecting element (46) over which the at least one continuous drive train (28) revolves,
wherein
c) the at least one continuous drive train (28) carries along a plurality of supporting members (54) which are arranged and configured such that they can cooperate with supporting structures (58) to which at least one object can be fastened,
**characterized in that**
d) the at least one continuous drive train (28) carries along also a plurality of coupling members (60a, 60b) which are arranged and configured such that they can cooperate with standardized holding components of vehicle bodies (12).

2. A device according to Claim 1, **characterized in that**
a) the coupling members (60a, 60b) are connected to the continuous drive train (28) such that they can pivot about a pivot axis (68);
b) the coupling members (60a, 60b) can be carried along by the load-bearing strand (36) in an operating position and by the return strand (38) in a return position which is pivoted with respect to the operating position;
c) an inward-pivot device (94), by means of which coupling members (60a, 60b) can be transferred from the return position into the operating position, is present at a first end (30) of the continuous drive train (28);
d) an outward-pivot device (82), by means of which coupling members (60a, 60b) can be transferred from the operating position into the return position, is present at a second end (32) of the continuous drive train.

3. A device according to Claim 2, **characterised in that** the pivot axis (68) extends parallel to the conveying direction (22).

4. A device according to Claim 2 or 3, **characterized in that** each coupling member (60a, 60b) is supported by a pivot element (64) which is connected to the continuous drive train (28) at one end by way of a pivot joint (66).

5. A device according to one of the Claims 2 to 4, **characterized in that** the pivot axis (68) is arranged in a region next to the continuous drive train (28).

6. A device according to one of the Claims 2 to 5, **characterized in that** the outward-pivot device (82) and the inward-pivot device (94) are configured such that coupling members (60a, 60b) can be carried along by the load-bearing strand (36) in an idle position which is pivoted with respect to the operating position.

7. A device according to Claim 6, **characterized in that** the inward-pivot device (94) is configured such that coupling members (60a, 60b) can be optionally moved, or not moved, out of their return position into the operating position.

8. A device according to one of the Claims 2 to 7, **characterized in that** the outward-pivot device (82) comprises guide elements (92a, 92b, 92c) by means of which the coupling members (60a, 60b) carry out the pivotal movement restraint guided.

9. A device according to one of the Claims 2 to 8, **characterized in that** the inward-pivot device (94) comprises a pressure element (96) by means of which a pivotal movement of the coupling members (60a, 60b) can be triggered.

10. A device according to one of the Claims 1 to 9, **characterized in that** the at least one continuous drive train (28) carries along at least coupling members (60a) of a first type and coupling members (60b) of a second type which can cooperate with different standardized holding components of vehicle bodies (12) respectively.

11. A device according to one of the Claims 1 to 10, **characterized in that** the coupling members (60a, 60b) are configured as bearing pins.

12. A device according to one of the Claims 1 to 11, **characterized in that** the supporting members (54) are configured as bearing profiles for bearing runners (56) of a conveying skid (58).

13. A device according to one of the Claims 1 to 12, **characterized in that** there are at least two guide devices (24, 26) with at least one respective continuous drive train (28) whereof the load-bearing strands (36) extend parallel to one another.

14. A plant for the surface treatment of objects having at least one treatment zone (BZ-1 to BZ-10), which comprises a conveying system (116) by means of which an object (12) can be conveyed through the at least one treatment zone (BZ-1 to BZ-10),
**characterized in that**
the conveying system (116) comprises a device (10) according to one of the Claims 1 to 13.

15. A plant according to Claim 14, **characterized in that**
a) the treatment zone (BZ-1 to BZ-10) is a first treatment zone with a first conveying system (116) and at least one further treatment zone (BZ-1 to BZ-10) is present which comprises a second conveying system (118) which is different from the first conveying system (116) and by means of which the vehicle body (12) can be conveyed through the second treatment zone (BZ-1 to BZ-10);
b) a transferring device (100, 110), by means of which the vehicle body (12) can be transferred from the first conveying system (116) to the second conveying system (118) or from the second conveying system (118) to the first conveying system (116), is arranged in a transfer region between the first treatment zone (BZ-1 to BZ-10) and the second treatment zone (BZ-1 to BZ-10).

## Revendications

1. Dispositif de transport d'objets, avec
a) au moins une chaîne cinématique continue (28), qui forme un brin en charge (36) et un brin à vide (38) et qui prescrit une direction de transport (22) ;
b) un dispositif de guidage (24, 26) pour la chaîne cinématique continue au moins unique (28), qui comprend un premier élément de renvoi (44) et au moins un deuxième élément de renvoi (46), sur lesquels circule la chaîne cinématique continue au moins unique (28),
sachant que
c) la chaîne cinématique continue au moins unique (28) entraîne avec elle une pluralité d'organes de support (54) qui sont disposés et conçus de telle sorte qu'ils peuvent coopérer avec des structures de support (58) sur lesquelles au moins un objet peut être fixé,
**caractérisé en ce que**
d) la chaîne cinématique continue au moins unique (28) entraîne en outre avec elle une pluralité d'organes d'accouplement (60a, 60b) qui sont disposés et conçus de telle sorte qu'ils peuvent coopérer avec des éléments de retenue normalisés de carrosseries de véhicules (12).

2. Dispositif selon la revendication 1, **caractérisé en ce que**
a) les organes d'accouplement (60a, 60b) sont reliés à la chaîne cinématique continue (28) à pivotement autour d'un axe de pivotement (68) ;
b) les organes d'accouplement (60a, 60b) peuvent être entraînés par le brin en charge (36) dans une position de travail et par le brin à vide (38) dans une position de retour pivotée par rapport à la position de travail ;
c) un dispositif de pivotement rentrant (94) est présent à une première extrémité (30) de la chaîne cinématique continue (28), dispositif au moyen duquel des organes d'accouplement (60a, 60b) peuvent être transférés de la position de retour dans la position de travail ;
d) un dispositif de pivotement sortant (82) est présent à une deuxième extrémité (32) de la chaîne cinématique continue (28), dispositif au moyen duquel des organes d'accouplement (60a, 60b) peuvent être transférés de la position de travail dans la position de retour.

3. Dispositif selon la revendication 2, **caractérisé en ce que** l'axe de pivotement (68) s'étend parallèlement à la direction de transport (22).

4. Dispositif selon la revendication 2 ou 3, **caractérisé en ce que** chaque organe d'accouplement (60a, 60b) est porté par un élément pivotant (64) qui est relié à une extrémité à la chaîne cinématique continue (28) par l'intermédiaire d'une articulation pivotante (66).

5. Dispositif selon l'une des revendications 2 à 4, **caractérisé en ce que** l'axe de pivotement (68) est disposé dans une région située à côté de la chaîne cinématique continue (28).

6. Dispositif selon l'une des revendications 2 à 5, **caractérisé en ce que** le dispositif de pivotement sortant (82) et le dispositif de pivotement rentrant (94) sont conçus de telle sorte que des organes d'accouplement (60a, 60b) peuvent être entraînés par le brin en charge (36) dans une position de repos pivotée par rapport à la position de travail.

7. Dispositif selon la revendication 6, **caractérisé en ce que** le dispositif de pivotement rentrant (94) est conçu de telle sorte que des organes d'accouplement (60a, 60b) peuvent être à volonté déplacés ou non de leur position de retour dans la position de travail.

8. Dispositif selon l'une des revendications 2 à 7, **caractérisé en ce que** le dispositif de pivotement sortant (82) comprend des éléments de guidage (92a, 92b, 92c) par lesquels les organes d'accouplement (60a, 60b) effectuent le mouvement de pivotement en étant guidés de manière forcée.

9. Dispositif selon l'une des revendications 2 à 8, **caractérisé en ce que** le dispositif de pivotement rentrant (94) comprend un élément de pression (96) par lequel un mouvement de pivotement des organes d'accouplement (60a, 60b) peut être déclenché.

10. Dispositif selon l'une des revendications 1 à 9, **caractérisé en ce que** la chaîne cinématique continue au moins unique (28) entraîne avec elle au moins des organes d'accouplement (60a) d'un premier type et des organes d'accouplement (60b) d'un deuxième type, qui peuvent coopérer avec des éléments de retenue normalisés respectifs différents de carrosseries de véhicules (12).

11. Dispositif selon l'une des revendications 1 à 10, **caractérisé en ce que** les organes d'accouplement (60a, 60b) sont réalisés sous la forme de boulons d'appui.

12. Dispositif selon l'une des revendications 1 à 11, **caractérisé en ce que** les organes de support (54) sont réalisés sous la forme de profilés d'appui pour des patins d'appui (56) d'un convoyeur à patins (58).

13. Dispositif selon l'une des revendications 1 à 12, **caractérisé en ce qu'**au moins deux dispositifs de guidage (24, 26) sont présents, avec une chaîne cinématique continue (28) respective, les brins en charge (36) desdites chaînes cinématiques s'étendant parallèlement entre eux.

14. Installation de traitement de surface d'objets, avec au moins une zone de traitement (BZ-1 à BZ-10) qui comprend un système de transport (116) au moyen duquel un objet (12) peut être transporté à travers la zone de traitement au moins unique (BZ-1 à BZ-10),
**caractérisée en ce que** le système de transport (116) comprend un dispositif (10) selon l'une des revendications 1 à 13.

15. Installation selon la revendication 14, **caractérisée en ce que**
a) la zone de traitement (BZ-1 à BZ-10) est une première zone de traitement munie d'un premier système de transport (116), et au moins une autre zone de traitement (BZ-1 à BZ-10) est présente, qui comprend un deuxième système de transport (118) qui est différent du premier système de transport (116) et au moyen duquel la carrosserie de véhicule (12) peut être transportée à travers la deuxième zone de traitement (BZ-1 à BZ-10) ;
b) un dispositif de transfert (100, 110) est disposé dans une zone de remise entre la première zone de traitement (BZ-1 à BZ-10) et la deuxième zone de traitement (BZ-1 à BZ-10), dispositif au moyen duquel la carrosserie de véhicule (12) peut être remise par le premier système de transport (116) au deuxième système de transport (118) ou par le deuxième système de transport (118) au premier système de transport (116).
